# FASCICULE DE BREVET EUROPEEN

(11) **EP 3 022 996 B1**
(45) Date de publication et mention de la délivrance du brevet: **31.01.2018**
(21) Numéro de dépôt: 15306820.0
(22) Date de dépôt: 17.11.2015
(51) Int. Cl.: A01B 63/02, A01B 63/118, A01C 19/04

(54) **MACHINE AGRICOLE AVEC UN DISPOSITIF DE COMMUTATION À DÉTECTION ANGULAIRE**
LANDWIRTSCHAFTLICHE MASCHINE MIT EINER UMSCHALTVORRICHTUNG MIT WINKELERFASSUNG
AGRICULTURAL MACHINE HAVING A SWITCHING DEVICE WITH ANGULAR DETECTION

(30) Priorité: 18.11.2014 FR 1461131
(43) Date de publication de la demande: 25.05.2016
(73) Titulaire: Kuhn SA (Societe Anonyme), 67700 Saverne (FR)
(72) Inventeur: TEITGEN, Hervé, 57370 PHALSBOURG (FR); HAAS, Olivier, 67660 REIMERSWILLER (FR); NORTH, Julien, 67370 WINTZENHEIM-KOCHERSBERG (FR)
(74) Mandataire: Nuss, Laurent

(56) Documents cités:
- EP-A1- 1 579 754
- EP-A1- 2 401 903

## Description

La présente invention se rapporte au domaine technique général du machinisme agricole. L'invention concerne notamment une machine agricole ou partie de machine présentant une position active de travail et une position inactive et comportant un dispositif de commutation et étant liée à un dispositif de liaison, le dispositif de commutation présentant un premier organe, un deuxième organe guidé par le premier organe et un moyen de commutation pour détecter un changement de position de la machine agricole ou de la partie de machine par rapport au dispositif de liaison.

Sur des machines agricoles telles que des semoirs, le lancement comme l'arrêt du doseur se fait manuellement au début et à la fin de la zone à semer. En pratique, le pourtour du champ est semé d'abord puis la partie centrale du champ en faisant des allers et retours. C'est l'utilisateur qui estime la limite où il lance, respectivement arrête, le doseur pour effectuer le demi-tour au bout du champ. Cette manipulation est régulière et fait partie des tâches répétitives à réaliser à chaque bout de champ. Ceci demande une certaine concentration tout au long de la journée pour éviter de démarrer ou d'éteindre le doseur trop tôt ou trop tard. Lorsque le doseur est lancé ou arrêté trop tard ou trop tôt, on constatera soit une zone non semée soit une zone semée en double. Pour soulager l'utilisateur, certains semoirs sont équipés de dispositif de commutation permettant de détecter au moins une position et par conséquent lancer ou arrêter le doseur. Le dispositif de commutation détecte, par exemple, la position haute ou basse du semoir ou de la barre de semis au moyen d'un ou deux capteurs.

Un autre semoir décrit par le document EP 2 401 903 utilise un dispositif de commutation pour détecter un mouvement linéaire afin de lancer ou d'arrêter la rotation du doseur. Ce dispositif de commutation est prévu sur le vérin de relevage de la barre de semis, il permet de détecter la rétraction voire l'allongement du vérin de relevage et de générer un signal qui déclenche ou arrête la rotation du doseur. Pour cela, le dispositif de commutation comporte un tube de guidage dans lequel est guidée une tige. Le tube de guidage est lié au cylindre et la tige est liée au piston du vérin de relevage. La longueur de la tige est au moins égale à la course du vérin de relevage. Pour la détection, le tube de guidage comporte une plaque avec un trou oblong et un capteur et la tige comporte un coulisseau équipé d'un indicateur, l'indicateur se déplace dans le trou oblong. Le mouvement relatif du coulisseau par rapport au tube de guidage est détecté après un changement de direction du vérin de relevage et notamment de l'indicateur qui s'approche ou s'éloigne du capteur. Le dispositif de commutation comprend un premier état lors du déplacement des éléments semeurs d'une position active dans une position inactive et un deuxième état lors du déplacement des éléments semeurs d'une position inactive dans une position active. Le capteur détecte un changement de direction via un guidage linéaire.

L'utilisation d'une telle solution est toutefois limitée à une cinématique avec un mouvement de translation et nécessite notamment la présence d'un organe ou actionneur translatif du type vérin.

De plus, un tel dispositif travaillant en translation doit présenter une taille en accord avec la taille de l'organe translatif dont il surveille les mouvements, d'où il résulte un encombrement important, surtout dans une direction. Il présente ainsi une exposition importante à l'environnement extérieur.

Enfin, ce dispositif connu fournit un renseignement sur l'état de l'organe ou de l'actionneur et non directement sur la position de la machine ou partie de cette machine.

La présente invention a pour but de remédier au moins aux principaux inconvénients précités. Elle doit notamment proposer une machine agricole ou une partie de machine avec un dispositif de commutation adaptable à une cinématique sans mouvement linéaire. Un autre but de l'invention est de réaliser un dispositif de commutation compact.

En vue d'atteindre au moins le but principal évoqué précédemment, la présente invention a pour objet une machine agricole ou une partie d'une telle machine du type évoqué dans le préambule de la revendication 1 et présentant en combinaison les caractéristiques mentionnées dans la partie caractérisante de cette revendication 1.

Ainsi, l'invention concerne une machine agricole ou une partie de machine présentant une position active de travail et une position inactive, comportant un dispositif de commutation et apte et destinée à être reliée à un dispositif de liaison (par exemple d'un tracteur). Ce dispositif de commutation présente un premier organe, un deuxième organe guidé par le premier organe par l'intermédiaire d'un système de transmission de mouvement et un moyen de commutation pour détecter un changement de position de la machine agricole ou de la partie de machine par rapport au dispositif de liaison. De plus, le premier organe est solidaire du dispositif de liaison et le deuxième organe est solidaire de la machine ou partie de machine agricole, le guidage entre le premier organe et le deuxième organe étant angulaire et le dispositif de commutation détectant le changement de position étant disposé près ou au niveau d'une articulation du dispositif de liaison avec ladite machine agricole.

Le guidage entre le premier organe et le deuxième organe étant angulaire et le changement de position étant détecté au niveau d'une articulation du dispositif de liaison, le dispositif de commutation est adaptable à des cinématiques de machine avec des mouvements de rotation. Il fournit, en outre, directement une information (position limite atteinte) sur la position de la machine ou partie de machine.

Des caractéristiques additionnelles avantageuses et des modes de réalisation particuliers de l'invention ressortent des revendications dépendantes 2 à 15.

D'autres caractéristiques et avantages de l'invention se dégageront de la description qui va suivre en regard des dessins annexés qui ne sont donnés qu'à titre d'exemples non limitatifs de l'invention. Sur ces dessins :
- la **figure 1** représente une vue de côté d'une machine agricole attelée à un tracteur agricole selon l'invention dans une position de travail,
- la **figure 2** est une vue en perspective du dispositif de commutation selon l'invention,
- la **figure 3** et la **figure** 4 sont des vues de côté d'un outil de travail du sol en position active de travail respectivement en position inactive,
- la **figure 5** et la **figure 6** représentent une vue de détail du dispositif de commutation des figures 3 et 4,
- la **figure 7** est une vue de détail du dispositif de commutation en position de transport.

Dans le mode de réalisation représenté, la machine agricole (1) ou la partie de machine est reliée directement ou indirectement au tracteur (2) via un dispositif de liaison (3) appartenant au tracteur. Le tracteur est amené à déplacer et à animer la machine agricole (1) ou la partie de machine suivant une direction d'avance indiquée par la flèche (A). Dans la suite de la description, les notions suivantes "avant", "arrière" et "devant", "derrière" sont définies par rapport au sens d'avance (A). La machine agricole (1) ou la partie de machine présente une position active de travail et une position inactive. La position inactive est une position dans laquelle la machine agricole (1) ne travaille pas, ses organes de travail (4) ne sont pas en contact avec le sol. La position inactive correspond à la position de transport pour les déplacements ou à la position relevée pour les demi-tours en bout de champ. Dans la position de transport, les organes de travail (4) sont plus éloignés du sol que dans la position relevée pour les demi-tours. La machine agricole (1) comporte un dispositif de commutation (5). Il permet de détecter un changement de position de la machine agricole (1) par rapport au tracteur (2). Un changement de position de la machine agricole (1) est comparable à un mouvement de la machine agricole (1).

De manière plus générale, on peut considérer le tracteur (2) comme étant le référentiel, c'est-à-dire la partie immobile, et la machine agricole (1) ou la partie de machine comme étant l'ensemble mobile. Le dispositif de commutation (5) a pour objet de détecter un changement de position entre l'ensemble mobile et le référentiel. Ce changement de position est détecté au niveau d'une liaison entre l'ensemble mobile et le référentiel. Dans le cas où l'ensemble mobile est une partie de machine, le référentiel correspond par exemple au châssis de la machine qui est immobile. Dans la description qui va suivre, l'invention sera décrite par rapport à une machine agricole (1) et un dispositif de liaison (3). Un dispositif de liaison qui porte une partie de machine munie d'un dispositif de commutation (5) selon l'invention fait également partie de la protection.

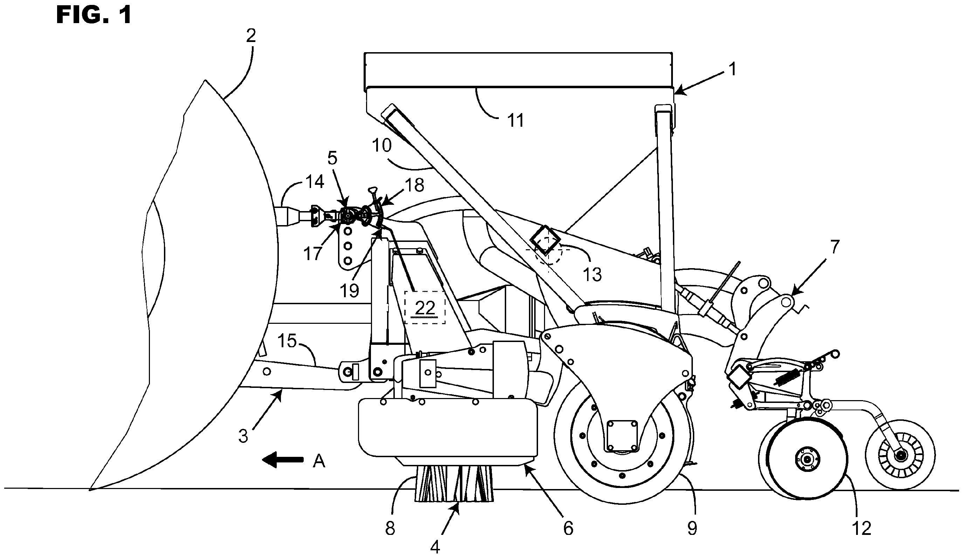

La machine agricole (1) représentée sur la figure 1 est un ensemble composé par un outil de travail (6) pour la préparation de lit de semences et par un outil de distribution (7) de produits. Il s'agit d'une herse rotative combinée à un semoir. Une telle combinaison permet d'accomplir différentes tâches lors d'un unique passage sur une parcelle, notamment la préparation du lit de semence et le semis en un seul passage. Les temps de travaux pour la préparation et l'implantation de semence sont donc réduits et les tassements du sol sont limités. La herse rotative comporte des dents (8) animées par la prise de force du tracteur (2) et un rouleau (9). Le rouleau (9) est placé à l'arrière des dents (8) et contrôle la profondeur de travail des dents (8). Le semoir comporte un bâti (10) supportant une trémie (11) et des organes d'enterrage (12) qui déposent la semence dans le sol. Dans sa partie inférieure, la trémie (11) est munie d'une distribution (13) pour extraire une quantité déterminée de graines. Les graines sont acheminées vers le sol par l'intermédiaire de tuyaux, les graines descendent par gravité ou par air sous pression. La figure 1 illustre la machine agricole (1) en position active de travail, les dents (8) et les organes d'enterrage (12) sont en terre. Dans cet exemple de réalisation, le dispositif de liaison (3) correspond à l'attelage trois points d'un tracteur (2) comportant une bielle supérieure (14) et deux bielles inférieures (15). La herse rotative (1) est ainsi attelée aux bielles inférieures (15) et à la bielle supérieure (14) via son cadre (16). La bielle supérieure (14) s'étend dans le plan vertical médian de la machine agricole (1) et les bielles inférieures (15) s'étendent de part et d'autre de la bielle supérieure (14).

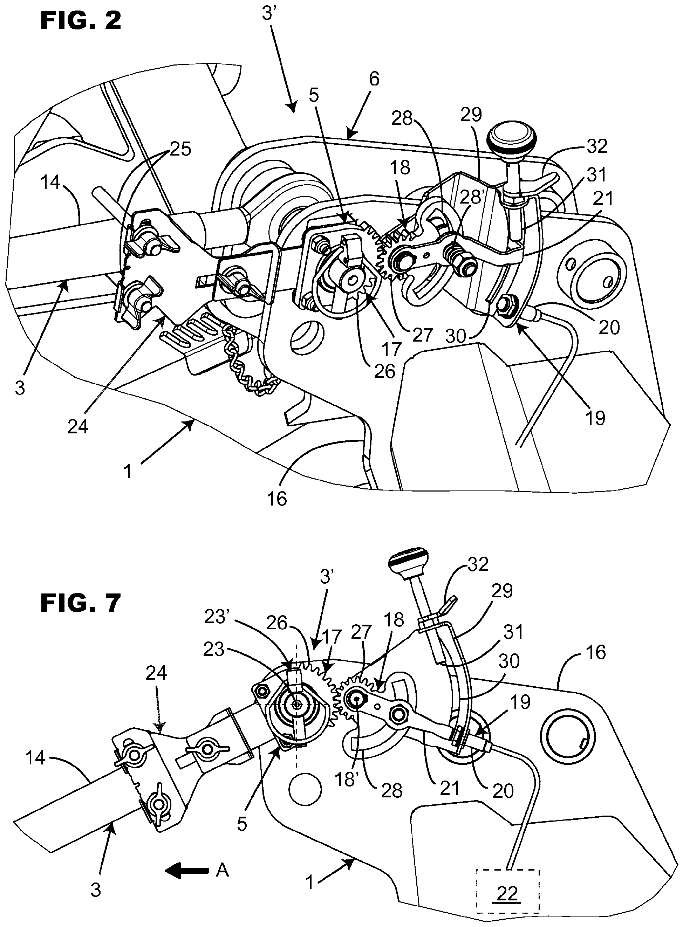

Selon la figure 1, le dispositif de commutation (5) de la machine agricole (1) est disposé au niveau de la liaison articulée ou articulation (3') entre la machine agricole (1) et le dispositif de liaison (3). Le dispositif de commutation (5) est représenté de manière plus détaillée sur la figure 2. Le dispositif de commutation (5) présente un premier organe (17), un deuxième organe (18) et un moyen de commutation (19). Le deuxième organe (18) est guidé par le premier organe (17). Le moyen de commutation (19) permet de détecter un changement de position de la machine agricole (1) par rapport au dispositif de liaison (3). Le moyen de commutation (19) comporte ainsi un capteur (20) et un indicateur (21). C'est la position de l'indicateur (21) par rapport au capteur (20) qui va être déterminante pour la détection d'un changement de position. Le moyen de commutation (19) et plus spécialement le capteur (20) va générer un signal qui est envoyé à un système électronique (22). En fonction du signal généré, le système électronique (22) va commander un moyen de commande ou une séquence de la machine agricole (1). En pratique, avec une herse rotative et un semoir, le système électronique (22) va pouvoir commander l'entraînement ou non de la rotation de la distribution (13) du semoir, l'animation ou non des dents (8) de la herse rotative, l'activation ou non d'une soufflerie ou la sortie ou la rétraction d'un actionneur.

D'après la figure 2, le dispositif de commutation (5) est placé à l'extrémité de la bielle supérieure (14) du côté du cadre (16) de la machine agricole (1) au niveau du point d'attelage supérieur (23). Le dispositif de commutation (5) est décalé latéralement par rapport au plan vertical médian de la machine agricole (1). Le dispositif de commutation (5) est ainsi disposé à proximité d'une articulation (3') du dispositif de liaison (3) avec la machine agricole (1), ou plus précisément de part et d'autre de celle-ci. Le premier organe (17) est solidaire du dispositif de liaison (3) et notamment de la bielle supérieure (14), et est par exemple monté directement sur la bielle supérieure (14) comme illustré sur les figures. Le deuxième organe (18) est solidaire de la machine agricole (1) et notamment du cadre (16).

Selon une importante caractéristique de l'invention, le guidage entre le premier organe (17) et le deuxième organe (18) est angulaire, c'est-à-dire que le premier organe (17) transmet un mouvement de rotation au deuxième organe (18) par l'intermédiaire d'un système de transmission de mouvement rotatif, et le changement de position est détecté au niveau d'une articulation (3') entre le dispositif de liaison (3) et la machine agricole (1). Grâce à ces caractéristiques, le dispositif de commutation (5) est adaptable dès qu'une cinématique est utilisée avec une rotation. Sur les machines agricoles, il y a généralement un nombre important de composants à intégrer dans un espace restreint et l'utilisation de liaison pivot est donc courante.

Ainsi, le dispositif de commutation (5) permet de relever l'orientation angulaire relative de la machine ou de la partie de machine (1) par rapport au dispositif de liaison (3) au niveau de l'articulation (3').

En relation avec le mode de réalisation préféré représenté sur les dessins annexés, le dispositif de commutation (5) a pour objet de détecter un mouvement entre la bielle supérieure (14) et le cadre (16). Pour cela, le premier organe (17) est lié d'une part à la bielle supérieure (14) via un système de fixation (24) et d'autre part à l'axe traversant le point supérieur d'attelage (23) coïncidant dans ce cas avec l'articulation (3'). Le premier organe (17) est fixé sur le côté du cadre (16). Il est articulé sur l'axe traversant le point d'attelage (23) et retenu axialement au moyen d'une goupille automatique. Le système de fixation (24) est muni de moyens permettant de s'adapter au diamètre de la bielle supérieure (14). Les moyens réalisent une liaison ponctuelle bidirectionnelle avec la bielle supérieure (14). Les moyens sont, par exemple, deux tiges (25) dont l'une est placée au-dessus et l'autre en dessous de la bielle supérieure (14) maintenues par des écrous à oreilles. En variante non représentée, le système de fixation (24) comporte par exemple une ou plusieurs goupille(s) automatique(s) (23'), un mors et/ou une pièce en U. Le système de fixation (24) peut également être adapté en longueur, par exemple en présentant deux branches formant par coopération une structure télescopique (assemblage par vis coulissant dans une rainure longitudinale d'une des deux branches). Le deuxième organe (18) est solidaire du cadre (16) de la machine agricole (1). Le moyen de commutation (19) est solidaire du deuxième organe (18).

D'une manière avantageuse, le dispositif de commutation (5) est démontable. Il peut ainsi être ou non utilisé sur la machine agricole (1) en fonction des besoins. Le démontage est rapide et ne nécessite pas l'aide d'un outil. Le système de fixation (24) est réalisé de façon à permettre un démontage et une adaptation rapide. Le maintien du premier organe (17) sur l'axe traversant le point d'attelage (23) avec la goupille automatique contribue aussi à un montage et démontage rapide. Ce dispositif de commutation (5) est mis en place après l'attelage de la machine agricole (1) au dispositif de liaison (3). En variante non représentée, le maintien du premier organe (17) sur l'axe traversant le point d'attelage (23) se fait grâce à un écrou freiné ou d'autre(s) moyen(s) analogue(s).

Préférentiellement, la transmission de mouvement entre le premier organe (17) et le deuxième organe (18) est une transmission sans jeu et sans glissement, pour ne pas fausser la détection, ni la commutation.

Dans l'exemple de réalisation représenté, le dispositif de commutation (5) comporte un système de transmission à engrenage cylindrique. Il comporte deux roues (26, 27) munies de dents, leur denture est droite. Les axes des roues (26, 27) sont parallèles et peu éloignés l'un de l'autre. L'avantage d'un tel système de transmission est qu'il est capable de transmettre des mouvements dans de petits espaces. Grâce à la denture, la transmission du mouvement de rotation entre les roues (26, 27) est constante puisqu'il n'y a pas de glissement. L'une des roues (26, 27) est solidaire du premier organe (17) et l'autre roue (27, 26) est solidaire du deuxième organe (18). La roue qui a le plus petit nombre de dents est appelée pignon (27). Dans la réalisation représentée, le deuxième organe (18) porte le pignon (27) et le premier organe (17) porte la roue dentée (26). L'axe de la roue dentée (26) est confondu avec l'axe du point d'attelage supérieur (23). L'engrenage cylindrique comporte des dents uniquement sur le secteur angulaire actif. Les dents s'étendent dans l'espace situé entre les axes des roues (26, 27). La roue dentée (26) et le pignon (27) tournent dans un sens opposé. Le deuxième organe (18) comporte une rainure (28), la rainure (28) est semi-circulaire. L'axe de révolution de la rainure (28) est confondu avec l'axe du pignon (27). L'indicateur (21) est centré sur l'axe du pignon (27) et est amené à se déplacer dans la rainure (28). Le montage de l'indicateur (21) dans la rainure (28) est glissant sous l'effet d'une faible force. Le montage est réalisé par adhérence. L'indicateur (21) est maintenu et entraîné par adhérence sur la pièce formant le deuxième organe (18), et comportant la rainure (28), au moyen d'un organe élastique (28'), par exemple un ressort de compression. Ce ressort (28') dont la force élastique est avantageusement réglable (par exemple au moyen d'un écrou), réalise ainsi une solidarisation par pincement ou contact sous pression entre l'organe (18) et l'indicateur (21). La plage de rotation effective du dispositif de commutation (5) est plus grande que la longueur de la rainure (28). La plage angulaire effective de l'indicateur (21) est plus petite que la plage de rotation réelle du dispositif de commutation (5). Le capteur (20) est solidaire du cadre (16) de la machine agricole (1). Dans la réalisation représentée, le capteur (20) est monté sur un support (29) dont la position est fixe par rapport au cadre (16). Le support (29) présente une ouverture (30) dans laquelle se déplace l'indicateur (21). Compte tenu de la forme allongée de ce dernier, on aboutit à une amplification de la magnitude du mouvement du deuxième organe (18) permettant une détection plus précise et un réglage plus aisé de la plage de mouvement de mesure. En outre, un déport du capteur (20) à distance de la zone de l'articulation (3') est également obtenu.

Dans la réalisation représentée sur les figures, on souhaite détecter le passage de la position active de travail à une position inactive, c'est-à-dire la levée de la machine agricole (1). Ainsi, le capteur (20) est placé au niveau de l'extrémité inférieure de l'ouverture (30).

Le moyen de commutation (19) comporte une butée réglable (31) permettant de réduire la plage d'oscillation de l'indicateur (21). En fonction des conditions du terrain, il est avantageux d'agrandir ou de réduire la plage disponible. La butée réglable (31) s'étend à l'extrémité supérieure de l'ouverture (30), opposée au capteur (20). L'indicateur (21) est amené à se déplacer dans l'ouverture (30) entre le capteur (20) et la butée réglable (31). A cet effet, un organe de blocage (32) est prévu pour maintenir la butée réglable (31) dans une position souhaitée. L'organe de blocage (32) comporte, par exemple, une paire écrou/contre-écrou dont l'un et/ou l'autre peut être pourvu au moins d'une oreille ou languette, tel que représenté sur les figures 2, 5, 6 et 7. La butée réglable (31) permet ainsi de régler la plage de débattement de l'indicateur (21) et donc la sensibilité du dispositif de commutation (5). Plus la distance entre la butée réglable (31) et le capteur (20) est courte, plus le dispositif de commutation (5) est sensible. Le moyen de commutation (19) s'étend à l'arrière de l'engrenage cylindrique, compte tenu du sens d'avance (A).

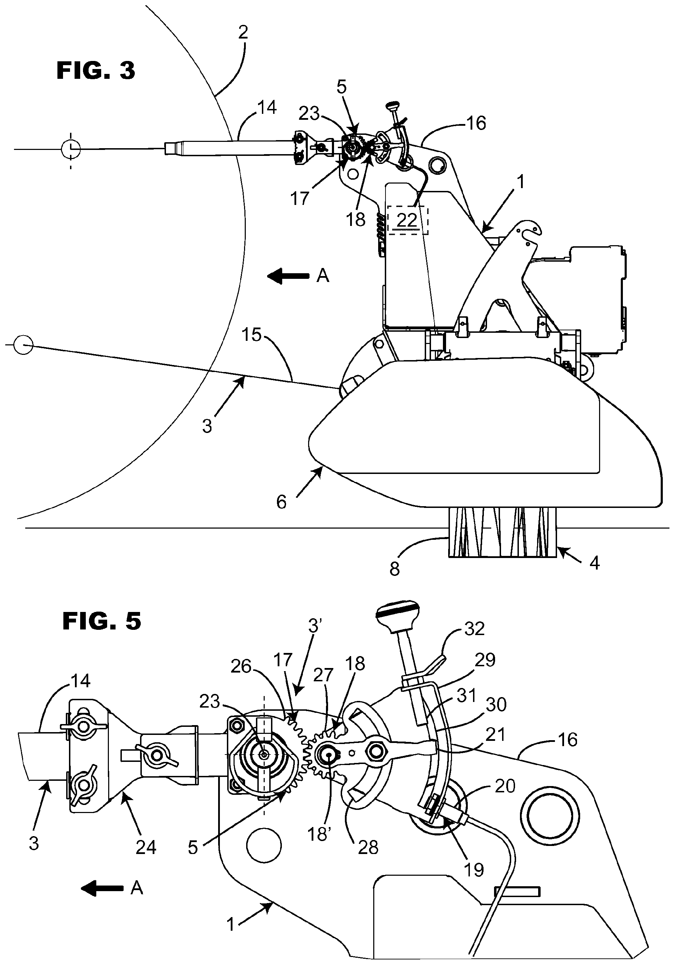

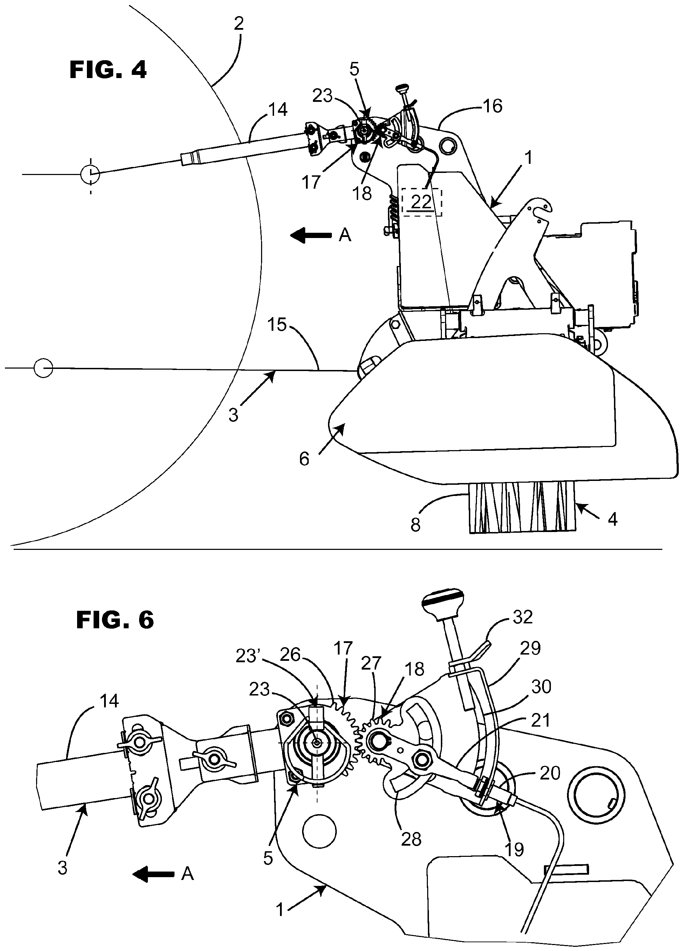

Les figures illustrent différentes positions de la machine agricole (1) par rapport au tracteur (2), seule la partie arrière du tracteur (2) est représentée. L'outil de travail (4) attelé au tracteur (2) est représenté sur les figures 3 et 4. Sur ces figures, le rouleau (9) et l'arbre à cardan qui relie la prise de force du tracteur (2) au carter de la herse rotative ne sont pas représentés. La figure 3 illustre la position de travail, la bielle supérieure (14) est sensiblement parallèle à la surface du sol. La figure 4 représente la herse rotative dans une position utilisée lors des demi-tours en fin de champ. Le dispositif de liaison (3) est relevé dans une position intermédiaire qui permet de dégager les dents (8) du sol. Dans la position de transport, le dispositif de liaison (3) est relevé en position haute pour dégager les dents (8) au maximum du sol. Pour passer d'une des positions à une autre position, le dispositif de liaison (3) est équipé d'au moins un actionneur. Les figures 5 à 7 représentent le dispositif de commutation (5), à plus grande échelle, respectivement dans une position de travail, dans une position relevée et dans la position de transport. Le dispositif de commutation (5) s'étend au niveau de l'articulation (3'), c'est-à-dire de la jonction en rotation ou liaison rotatoire, entre la bielle supérieure (14) et le cadre (16) de la machine agricole (1).

La figure 5 illustre le dispositif de commutation (5) et notamment l'indicateur (21) en position active de travail. L'indicateur (21) s'étend entre le capteur (20) et la butée de réglage (31). Sur les figures 6 et 7, l'indicateur (21) est placé en face du capteur (20). Lors du passage de la position de travail (fig. 5) à la position relevée (fig. 6), la bielle supérieure (14) pivote vers le haut par rapport au point d'articulation supérieur (23) et le deuxième organe (18) pivote vers le bas. Avec ce changement de position de la machine agricole (1), l'indicateur (21) passe devant le capteur (20) qui transmet l'information au système électronique (22). De manière plus détaillée, lors du passage de la position active à la position inactive, la roue dentée (26) décrit une rotation dans le sens antihoraire autour de son axe. Par engrainement, la rainure (28) ou le pignon (27) décrit une rotation dans le sens horaire à une vitesse différente. L'indicateur (21) est entraîné solidairement par la pièce comportant la rainure (28) par adhérence. Le déplacement de l'indicateur (21) est effectif jusqu'à ce qu'il arrive en butée basse en face du capteur (20). À partir de ce moment, la rainure (28) peut continuer sa course en rotation et il se crée un mouvement relatif par une friction entre la pièce portant la rainure (28) et l'indicateur (21). Ce mouvement relatif permet de limiter la course de l'indicateur (21) au maximum de façon à ne détecter qu'une partie de la course, de façon à détecter le changement d'état du dispositif de liaison (3) au plus vite. Lors du passage de la position inactive à la position active, le fonctionnement se fait dans l'autre sens à la différence que l'indicateur (21) viendra en butée contre la butée réglable (31). Un tel dispositif de commutation (5) est donc rapide et précis. Par ailleurs, la détection du changement de position se fait quelle que soit la position de départ, que cette position soit définie ou quelconque.

Dans le cas d'un semoir, il est impératif d'arrêter la rotation de la distribution (13) lorsque la machine agricole (1) est relevée. Avec un dispositif de commutation (5) selon l'invention, la détection du changement de position du semoir permet une animation en rotation ou non de la distribution (13) de façon précise.

Pour augmenter encore la précision du dispositif de commutation (5), il est prévu que son rapport de transmission soit supérieur à 1. Il s'agit donc d'un rapport de multiplication. Le diamètre primitif de la roue dentée (26) est plus grand que le diamètre primitif du pignon (27). Le rapport de transmission correspond au rapport entre les diamètres primitifs de la roue dentée (26) et du pignon (27). Grâce au rapport de multiplication, la course nécessaire pour la détection d'un mouvement est courte et le dispositif de commutation (5) est réactif.

Dans une alternative non illustrée, les roues (26, 27) de l'engrenage cylindrique présentent des dents sur tout leur cercle primitif de fonctionnement. Le système de transmission à engrenage cylindrique peut être remplacé par un autre système de transmission de mouvement rotatif, par exemple un système de transmission à roues cylindriques à friction. Un tel système est moins précis puisque l'entraînement se fait par adhérence et qu'un certain glissement est à prévoir. D'autres systèmes de transmission à chaîne ou à courroie peuvent également être envisagés, mais ceux-ci seront plus volumineux et ne seront donc pas adaptables aussi facilement.

Selon une autre alternative non représentée, le dispositif de commutation (5) est situé au niveau d'une des bielles inférieures (15) du dispositif de liaison (3). La description cite une machine agricole composée d'un outil de travail et d'une machine de distribution. La machine agricole peut également être une machine de travail du sol, un semoir, une machine de fenaison, une machine de récolte des fourrages, une machine de traitement des cultures ou une machine dédiée à la conduite d'élevage. Ces machines agricoles disposent d'organes de travail qui sont animés ou statiques. L'animation des organes de travail pourra se faire par la prise de force du tracteur ou grâce à un moteur électrique ou un moteur hydraulique.

Dans un mode de réalisation alternatif non représenté, le dispositif de liaison (3) appartient à l'attelage arrière d'une première machine agricole reliée au tracteur. Dans ce cas, la machine agricole (1) ou partie de machine est attelée au dispositif de liaison (3) de la première machine agricole et le dispositif de commutation (5) est monté de part et d'autre de l'articulation en rotation (3') entre la machine agricole (1) ou partie de machine et le dispositif de liaison (3) de la première machine.

Alternativement encore, le dispositif de commutation (5) est monté à la jonction entre deux pièces d'un même châssis de machine agricole, par exemple d'un châssis de roue qui sont mobiles en rotation entre elles. Dans ce cas, le dispositif de liaison (3) est simplement l'une des deux pièces articulées en rotation.

Il est bien évident que l'invention n'est pas limitée aux modes de réalisation décrits ci-dessus et représentés sur les dessins annexés. Des modifications restent possibles, notamment en ce qui concerne la constitution ou le nombre des divers éléments ou par substitution d'équivalents techniques, sans pour autant sortir du domaine de protection tel qu'il est défini par les revendications suivantes.

## Revendications

1. Machine agricole (1) ou partie de machine présentant une position active de travail et une position inactive, comportant un dispositif de commutation (5) et étant configurée pour être reliée à un dispositif de liaison (3), le dispositif de commutation (5) présentant un premier organe (17), un deuxième organe (18) guidé par le premier organe (17) par l'intermédiaire d'un système de transmission de mouvement et un moyen de commutation (19) pour détecter un changement de position de la machine agricole (1) ou de la partie de machine par rapport au dispositif de liaison (3),
machine ou partie de machine agricole (1) ***caractérisée en ce que*** le premier organe (17) est configuré pour être solidaire du dispositif de liaison (3) et le deuxième organe (18) est solidaire de la machine agricole (1) ou de la partie de machine, le guidage entre le premier organe (17) et le deuxième organe (18) étant angulaire, c'est-à-dire que le premier organe (17) transmet un mouvement de rotation au deuxième organe (18) par l'intermédiaire d'un système de transmission de mouvement rotatif, et le dispositif de commutation (5) détectant le changement de position étant configuré pour être disposé au niveau d'une articulation (3') en rotation du dispositif de liaison (3) avec la machine ou partie de machine agricole (1).

2. Machine selon la revendication 1, ***caractérisée en ce que*** le dispositif de commutation (5) est décalé latéralement par rapport au plan vertical médian de la machine agricole (1).

3. Machine selon la revendication 1 ou 2, ***caractérisée en ce* que** le moyen de commutation (19) est solidaire du deuxième organe (18).

4. Machine selon l'une quelconque des revendications 1 à 3, ***caractérisée en ce que*** le deuxième organe (18) comporte une rainure (28) et que le moyen de commutation (19) présente un capteur (20) et un indicateur (21), l'indicateur (21) étant monté dans la rainure (28) avec faculté de déplacement.

5. Machine selon la revendication 4, ***caractérisée en ce que*** le rayon de la rainure (28), en forme d'arc de cercle, est centré sur l'axe du deuxième organe (18).

6. Machine selon la revendication 4 ou 5, ***caractérisée en ce que*** le montage de l'indicateur (21) dans la rainure (28) est réalisé par adhérence et que la rainure (28) guide le déplacement de l'indicateur (21), ledit indicateur (21) étant apte à se déplacer dans une ouverture (30) d'un support fixe (29) sur lequel est monté le capteur (20), entre ce dernier et une butée réglable (31).

7. Machine selon la revendication précédente, ***caractérisée en ce que*** l'indicateur (21) est maintenu par un organe élastique sur le deuxième organe (18).

8. Machine selon l'une quelconque des revendications précédentes, ***caractérisée en ce que*** le dispositif de commutation (5) est démontable.

9. Machine selon la revendication précédente, ***caractérisée en ce que*** le premier organe (17) porte un système de fixation (24) démontable, apte et destiné à maintenir le dispositif de commutation (5) fixe par rapport au dispositif de liaison (3), en particulier pour solidariser en rotation le premier organe (17) à une composante structurelle et fonctionnelle (14) dudit dispositif de liaison (3).

10. Machine selon la revendication précédente, ***caractérisée en ce que*** le système de fixation (24) comporte deux tiges (25) prévues pour être placées et maintenues de part et d'autre d'une composante structurelle et fonctionnelle (14) du dispositif de liaison (3), par exemple de la bielle supérieure (14) d'un attelage trois points (3) d'un tracteur (2).

11. Machine selon la revendication 6, ***caractérisée en ce que*** le capteur (20) est placé au niveau de l'extrémité inférieure de l'ouverture (30).

12. Machine selon l'une quelconque des revendications précédentes, ***caractérisée en ce que*** le dispositif de commutation (5) comporte, entre le premier organe (17) et le deuxième organe (18), un système de transmission choisi dans le groupe formé par les transmissions à engrenage cylindrique, à roues cylindriques à friction, à chaîne ou à courroie, éventuellement crantée.

13. Machine selon l'une quelconque des revendications précédentes, ***caractérisée en ce que*** le rapport de transmission du dispositif de commutation (5) est supérieur à 1.

14. Machine selon l'une quelconque des revendications précédentes, ***caractérisé en ce que*** le premier organe (17) est monté sur l'axe traversant un point d'attelage (23) du dispositif de liaison (3) et est maintenu sur cet axe par une goupille automatique (23').

15. Machine selon l'une quelconque des revendications 4 à 7, ***caractérisé en ce que*** l'indicateur (21) présente une forme allongée avec, d'une part, une première partie solidaire en rotation du deuxième organe (18) et montée pivotante sur le cadre (16) de la machine ou partie de machine (1), autour d'un axe coïncidant avec l'axe de montage rotatoire (18') dudit deuxième organe (18) et, d'autre part, une seconde partie dont l'extrémité distale est détectable par le capteur (20).

## Patentansprüche

1. Landwirtschaftliche Maschine (1) oder Maschinenteil mit
- einer aktiven Arbeitsposition und eine Ruheposition, welche eine Schaltvorrichtung (5) aufweist und ausgebildet ist, mit einer Verbindungseinrichtung (3) verbunden zu werden, wobei die Schaltvorrichtung (5) ein erstes Element (17) und einen zweites Element (18) aufweist, welches durch das erste Element (17) über ein intermediäres Bewegungsübertragungssystem führbar ist, und
- einem Schaltmittel (19) zur Erfassung einer Änderung der Position der landwirtschaftliche Maschine (1) oder des Maschinenteils relativ zur Verbindungseinrichtung (3),
**dadurch gekennzeichnet,**
- **dass** das erste Element (17) mit der Verbindungseinrichtung (3) fest verbunden ist, und das zweite Element (18) mit der landwirtschaftlichen Maschine (1) oder dem Maschinenteil fest verbunden ist, wobei die Führung zwischen dem ersten Element (17) und dem zweiten Element (18) gewinkelt ist, das heißt, dass das erste Element (17) eine Rotationsbewegung mittels eines Übertragungssystems für Rotationsbewegungen auf das zweiten Element (18) überträgt, und
- **dass** die Positionsänderung erfassende Schalteinrichtung (5) an einem Drehgelenk (3') der Verbindungseinrichtung (3) mit der Maschine oder einem Teil der landwirtschaftlichen Maschine (1) angeordnet ist.

2. Maschine nach Anspruch 1,
**dadurch gekennzeichnet,**
**dass** die Schalteinrichtung (5) seitlich von der mittleren Vertikalebene der landwirtschaftlichen Maschine (1) versetzt ist.

3. Maschine nach Anspruch 1 oder 2,
**dadurch gekennzeichnet,**
**dass** die Mittel (19) an dem zweiten Element (18) befestigt ist.

4. Maschine nach einem der Ansprüche 1 bis 3,
**dadurch gekennzeichnet,**
- **dass** das zweite Element (18) eine Nut (28) aufweist und
- **dass** das Schaltmittel (19) einen Sensor (20) und einen Indikator (21) aufweist, wobei der Indikator (21) in der Nut (28) verschiebbar gelagert ist.

5. Maschine nach Anspruch 4,
**dadurch gekennzeichnet,**
**dass** der Radius der Nut (28) in Form eines Kreisbogens auf der Achse des zweiten Elements (18) zentriert ist.

6. Maschine nach Anspruch 4 oder 5,
**dadurch gekennzeichnet,**
**dass** die Befestigung des Indikators (21) in der Nut (28) durch Kleben hergestellt ist, und die Nut (28) die Bewegung des Indikators (21) führt, wobei der Indikator (21) in einer Öffnung (30) eines festen Trägers (29), auf welchem der Sensor (20) angeordnet ist, zwischen diesem und einem einstellbaren Anschlag (31) beweglich ist.

7. Maschine nach dem vorhergehenden Anspruch,
**dadurch gekennzeichnet,**
**dass** der Indikator (21) von einem elastischen Element an dem zweiten Element (18) gehalten wird.

8. Maschine nach einem der vorhergehenden Ansprüche,
**dadurch gekennzeichnet,**
**dass** die Schaltvorrichtung (5) abnehmbar ist.

9. Maschine nach dem vorhergehenden Anspruch,
**dadurch gekennzeichnet,**
**dass** das erste Element (17) ein abnehmbares Befestigungssystem (24) trägt, welches ausgebildet ist, die Schaltvorrichtung (5) bezüglich der Verbindungsvorrichtung fest zu halten, insbesondere zum drehbaren Befestigen des ersten Elements (17) an einem strukturellen und funktionellen Bauteil (14) der Verbindungsvorrichtung (3).

10. Maschine nach dem vorhergehenden Anspruch,
**dadurch gekennzeichnet,**
**dass** das Befestigungssystem (24) zwei Stangen (25) umfasst, die an jeder Seite eines strukturellen und funktionalen Bauteils (14) der Verbindungsvorrichtung (3), beispielsweise am Oberlenker (14) einer Dreipunktaufhängung (3) eines Traktors (2), vorgesehen sind.

11. Maschine nach Anspruch 6,
**dadurch gekennzeichnet,**
**dass** der Sensor (20) am unteren Ende der Öffnung (30) angeordnet ist.

12. Maschine nach einem der vorhergehenden Ansprüche,
**dadurch gekennzeichnet,**
**dass** die Schaltvorrichtung (5) ein Übertragungssystem zwischen dem ersten Element (17) und dem zweiten Element (18) umfasst, das aus der Gruppe von Getrieben eines zylindrisches Zahnrads mit zylindrischen Reib-, Ketten- oder Riemenrädern, die eingekerbt sein können, ausgewählt ist.

13. Maschine nach einem der vorhergehenden Ansprüche,
**dadurch gekennzeichnet,**
**dass** das Übersetzungsverhältnis der Schaltvorrichtung (5) größer als 1 ist.

14. Maschine nach einem der vorhergehenden Ansprüchen,
**dadurch gekennzeichnet,**
**dass** das erste Element (17) auf der Welle durch einen Kopplungspunkt (23) der Verbindungseinrichtung (3) und durch einen auf dieser Welle gehalten automatischen Stift (23') befestigt ist.

15. Maschine nach einem der Ansprüche 4 bis 7,
**dadurch gekennzeichnet,**
**dass** der Indikator (21) eine längliche Form aufweist, wobei einerseits ein erster Teil drehbar an dem zweiten Element (18) befestigt und schwenkbar an dem Rahmen (16) der Maschine oder dem Maschinenteil (1) um eine Achse ist, die mit der Drehbefestigungsachse (18') des zweiten Elements (18) zusammenfällt, und andererseits einem zweiten Teil, dessen distales Ende durch den Sensor (20) detektierbar ist.

## Claims

1. Agricultural machine (1) or part of machine having an active working position and an inactive position, comprising a switching device (5) and being configured to be connected to a connecting device (3), the switching device (5) having a first member (17), a second member (18) guided by the first member (17) by means of a movement transmission system and a switching means (19) for detecting a change of position of the agricultural machine (1) or part of machine relative to the connecting device (3),
agricultural machine (1) or part of machine **characterised in that** the first member (17) is configured to be integral with the connecting device (3) and the second member (18) is integral with the agricultural machine (1) or part of machine, the guiding between the first member (17) and the second member (18) being angular, that is, the first member (17) transmits a rotary movement to the second member (18) by means of a rotary movement transmission system, and the switching device (5) detecting the change of position being configured to be disposed at the level of a rotating joint (3') of the device (3) for connection to the agricultural machine (1) or part of machine.

2. Machine according to claim 1, **characterised in that** the switching device (5) is offset laterally from the median vertical plane of the agricultural machine (1).

3. Machine according to claim 1 or 2, **characterised in that** the switching means (19) is integral with the second member (18).

4. Machine according to any one of claims 1 to 3, **characterised in that** the second member (18) comprises a groove (28) and **in that** the switching means (19) has a sensor (20) and an indicator (21), the indicator (21) being mounted in the groove (28) with a capacity for displacement.

5. Machine according to claim 4, **characterised in that** the radius of the groove (28), in the form of an arc of a circle, is centred on the axis of the second member (18).

6. Machine according to claim 4 or 5, **characterised in that** the mounting of the indicator (21) in the groove (28) is carried out by adhesion and **in that** the groove (28) guides the displacement of the indicator (21), said indicator (21) being capable of being displaced in an opening (30) in a fixed support (29) on which is mounted the sensor (20), between the latter and an adjustable stop (31).

7. Machine according to the preceding claim, **characterised in that** the indicator (21) is held by an elastic member on the second member (18).

8. Machine according to any one of the preceding claims, **characterised in that** the switching device (5) is removable.

9. Machine according to the preceding claim, **characterised in that** the first member (17) carries a removable fixing system (24), capable of keeping and designed to keep the switching device (5) fixed relative to the connecting device (3), in particular in order to rotatably connect the first member (17) to a structural and functional component (14) of said connecting device (3).

10. Machine according to the preceding claim, **characterised in that** the fixing system (24) comprises two rods (25) provided to be placed and held on either side of a structural and functional component (14) of the connecting device (3), for example of the upper connecting rod (14) of a three-point hitch (3) of a tractor (2).

11. Machine according to claim 6, **characterised in that** the sensor (20) is placed at the level of the lower end of the opening (30).

12. Machine according to any one of the preceding claims, **characterised in that** the switching device (5) comprises, between the first member (17) and the second member (18), a transmission system selected from among the group composed of spur gear, friction-type spur gear, chain or belt, if appropriate toothed belt, transmissions.

13. Machine according to any one of the preceding claims, **characterised in that** the transmission ratio of the switching device (5) is greater than 1.

14. Machine according to any one of the preceding claims, **characterised in that** the first member (17) is mounted on the axis traversing a coupling point (23) of the connecting device (1) and is held on this axis by an automatic pin (23').

15. Machine according to any one of claims 4 to 7, **characterised in that** the indicator (21) has an elongate shape with, on the one hand, a first portion rotatably connected to the second member (18) and mounted pivotably on the frame (16) of the machine or part of machine (1), about an axis coinciding with the rotary mounting shaft (18') of said second member (18) and, on the other hand, a second portion of which the distal end is detectable by the sensor (20).
